# EUROPEAN PATENT APPLICATION

(11) **EP 2 009 755 A2**
(43) Date of publication of application: **31.12.2008**
(21) Application number: 08380183.7
(22) Date of filing: 24.06.2008
(51) Int. Cl.: H02G 3/00

(54) **Box for electrical mechanisms**

(30) Priority: 25.06.2007 ES 200701367 U
(71) Applicant: Unex Aparellaje Electrico S.L., 08903 L'Hospitalet de Llobregat (Barcelona) (ES)
(72) Inventor: Salcedo Suñol, Eloi, 08620 Sant Vicenç dels Horts (Barcelona) (ES)
(74) Representative: Curell Aguilà, Marcelino

(57) **Abstract**

This box for electrical mechanisms is made up of a hollow orthohedric body divided into a first cavity intended to house an electrical mechanism and a second cavity that has practicable closing means and is intended to house the electrical conductors of the electrical mechanism, with the hollow body having side and end walls all of which are outside walls without a link to a bottom wall, a flat top frame that is linked to three adjacent side and end walls, and only covers the first cavity leaving the second cavity open; and inner walls that extend towards a common bottom wall from the inner edge of the flat top frame to form the first cavity, which inner walls have passages for communicating with the second cavity, fixing means the electrical mechanism and fixing means the box to a wall surface.

## Description

### Aim of the invention

The invention relates, as its title indicates, to a box for electrical mechanisms, in particular a box which, while housing electrical control mechanisms inside it, also allows the connections of said mechanisms to be controlled, the unit being intended particularly to be installed on the wall surface, in cooperation with raceways of the so-called moulding type for laying down electrical conductors.

### Background to the invention

Registration applications are known relating to boxes for electrical mechanisms wherein a space is foreseen, next to the space provided for said mechanisms, which is intended to house future electrical mechanisms of a smaller size, as is the case of the Spanish Utility Model Applications Nos. 9001126 and 9403201, which annexed spaces are closed in a practicable manner by covers, while in other cases the annexed space is used for passing the installation's electrical conductors and for allowing some of them to be branched towards the electrical mechanism, as occurs in the Spanish Utility Model Applications No. 8700451, wherein said space does not have a practicable cover to allow the access to it, and Nos. 200200013 and 200501412, wherein said practicable cover has been envisaged.

In the case of the Spanish Utility Model Application No. 8700451, it is obvious that to control and repair the conductors inside said annexed space, it is necessary to dismantle the box from the wall on which it is located, and this is cumbersome and awkward; while on the other hand it is obvious that the cover in the other utility model applications considered, is practicable and therefore very comfortable and easy to open. Nevertheless, the latter suffer from the drawback that once open the cover becomes unattached from the box, and this can hinder handling and may led to the cover getting lost.

### Description of the invention

In order to overcome this drawback the solution has been adapted such that, in the closed use position, the cover is always attached in a hingeable manner to the box, without hindering the handling operations to be carried inside it, and further that said box is provided with means that maintain its closed position in a reliable manner.

According to the above solution the box for electrical mechanisms has been developed which is the object of the invention, which is made up of a hollow body divided into a first cavity, intended to house an electrical mechanism in a firm and electrically insulated manner, and a second cavity which, having practicable closing means, is intended to house the branches of the electrical conductors for connecting them to the electrical mechanism and, where appropriate, to pass the electrical conductors that are not intended to be connected to the electrical mechanism in said first cavity, the hollow body adopting an orthohedric shape that has side and end walls, all of which are outside walls without a link to the bottom wall, a flat top frame that is linked to three adjacent side and end walls, and only covers the first cavity leaving the second cavity open; and inside walls extending towards a common bottom wall, from the inner edge of said flat top frame to form the first cavity, said inner walls being provided with passages for communicating with the second cavity, with seating and fixing means for the electrical mechanism to the box and fixing means of said box to a wall surface.

One characteristic of the invention relates to the fact that the opening of the hollow body of the box that corresponds to the second cavity of the box is closed by means of a practicable cover that has a tab at each end for fitting into the corresponding inner side wall and a harpooned tooth that fits into a groove on each of said side walls, while on its longitudinal edges, the one towards the outside of the box, it has a fitting edge into an end wall of said box and, on the longitudinal edge towards the inside of the box, it has harpooned teeth that fit into the housings arranged on one face of the inner wall of the box that corresponds to the second cavity.

Another characteristic of the invention lies in the fact that the opening of the hollow body of the box that corresponds to the second cavity is closed by a practicable cover which, attached in a hinged manner to said cavity, in its closed position is coplanar to the flat top frame of the first cavity.

Another characteristic of the invention lies in the fact that the practicable cover includes a hinge joint for the linking of the cover to the box, which is made up of respective arched brackets that project in an orthogonal and mirror symmetrical manner at the ends of the inner face of the cover, each of them having an equally arched slit that runs along a fixed guide pin arranged on the inner face of the box walls that are adjacent to the cover ends.

Another characteristic of the invention consists in the fact that the arched slits of the arched brackets have the same transversal dimension along their whole extension, which is equal to the diameter of the fixed guide pins, although said dimension is locally reduced near the ends of said slits, by means of respective opposing projections, to form an end housing that has the same diameter as the fixed guide pins in order to configure a secure position of end of stroke for the guide pins, in the cover's open and closed positions.

Another characteristic of the invention is determined by the fact that the practicable cover has a retention tab on its end edges that fits into a corresponding closing arrangement provided on the side walls of the box hollow body, which are adjacent to the ends of the practicable cover, said tab being formed by an inclined entry plane and a retainer projection.

A further characteristic of the invention is the fact that the box wall that is included in the opening of the second cavity has a longitudinal rib near its top edge on which it seats, in the cover's closed position, and a similar rib provided near the cover's rear edge.

Other characteristics include the fact that the hollow body can have two or more first cavities accompanied by second cavities of the group comprising one cavity that covers the two or more first cavities or one cavity for each of the first cavities. In the latter case, the two or more second cavities can be closed in a practicable manner by one single common cover, or they can be closed in a practicable manner by individual covers.

Finally, it is worth considering some characteristics which, although they complement the ones above, are not compulsory and consist of the following: the space defined by the second cavity can be compartmented in the horizontal direction into two subspaces parallel to the seating plane of the hollow body of the box, by means of a rectangular separator plate that has, on one of its longitudinal edges, appendices which can are attachable to positioning means provided on the central inside wall of the walls limiting the second cavity; the rectangular separator plate having longitudinal and transversal grooves that define a plurality of portions of said plate that can be separated, the rectangular separator plate having a pair of cantilever fingers projecting from each end of said rectangular separator plate and which have rectangular notches at the end thereof that are orientated so that the ones at one end can fit into the ones at the other opposite end of another rectangular separator plate installed in a juxtaposed box; and the rectangular separator plate has, opposite the positioning appendices, respective fitting teeth, one being arranged opposite the positioning appendices of the rectangular separator plate on the bottom face of the longitudinal edge of said plate, and the other one on the bottom face of the longitudinal edge of said rectangular separator plate, which allow a moulding conduit for laying down electrical conductors to fit into the cover's attachment groove.

### Brief description of the drawings

To facilitate the understanding of the preceding ideas, a preferred embodiment of the box for electrical mechanisms that is the object of this invention is described below, with reference to the attached drawings, in which:
Figure 1 is a top exploded perspective view of an embodiment of the box for one single electrical mechanism that is the object of the invention, wherein the practicable cover, in a preassembly stage, is separated from the body of the actual box.
Figure 2 is a detailed sectioned view of the hinge joint of the practicable cover on the box body when said cover is in its stable open position.
Figure 3 is a detailed sectioned view of the hinge joint of the practicable cover on the box body when said cover is in its stable closed position.
Figure 4 is a bottom partially sectioned perspective view of the body of the box in Figure 1.
Figure 5 is a sectioned view along the line V -V of the body of the box in Figure 1.
Figure 6 is a cross-sectional view of the body of the box in Figure 1, detailing in annexed figures the cover's locking arrangement in its closed position and the arrangement of weakening lines in areas of the side walls.
Figure 7 is a bottom plan view of the part of the box in Figure 4 that includes the second cavity, wherein a rectangular separator plate has been installed that divides said cavity into two parallel subspaces.
Figure 8 represents a sectioned view along the VIII - VIII of Figure 7.
Figure 9 is a top exploded perspective view of a preferred embodiment of the body for one single electrical mechanism that is the object of the invention, wherein the practicable cover of the second cavity is separated from the box body.
Figure 10 is a top plan view of the box body in the preceding figure.
Figure 11 is a bottom plan view of the box body in Figure 9.
Figure 12 is a perspective view of the inner side of the practicable cover.
Figure 13 is a sectioned view of a detail of the practicable cover in the box body when said cover is in its stable closed position.
Figure 14 is a top perspective view wherein the box is intended to house two electrical mechanisms.

### Description of an embodiment of the invention

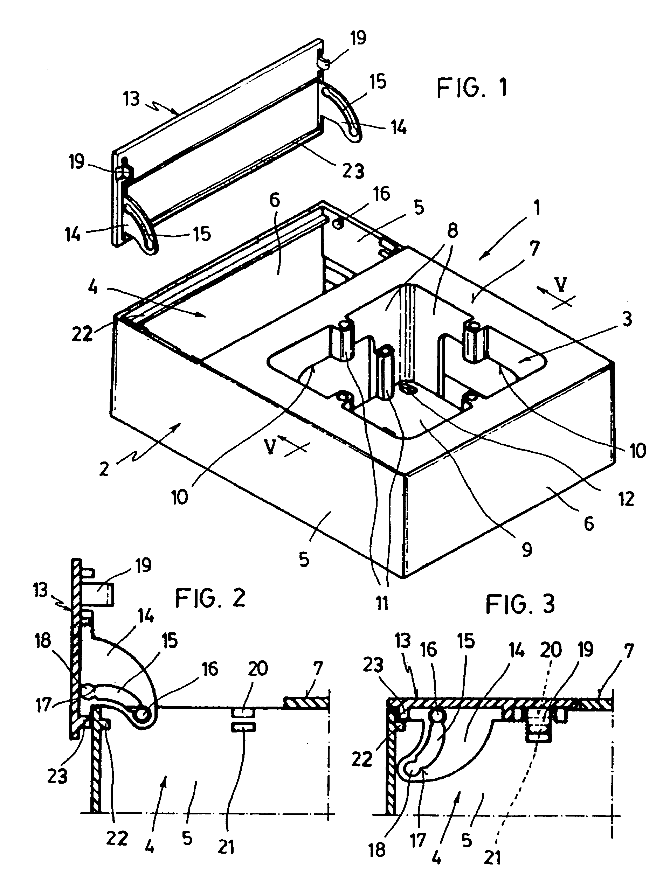

Figure 1 shows a box 1 for an electrical mechanism that consists of a hollow body 2 divided into a first cavity 3 intended to be closed when it houses an electrical mechanism in a firm and electrically insulated manner and a second cavity 4 provided with practicable closing means, which is intended to house the branches of the electrical conductors provided for connecting them to the electrical mechanism and, where appropriate, to pass the electrical conductors that are not intended to be connected to the electrical mechanism in said first cavity.

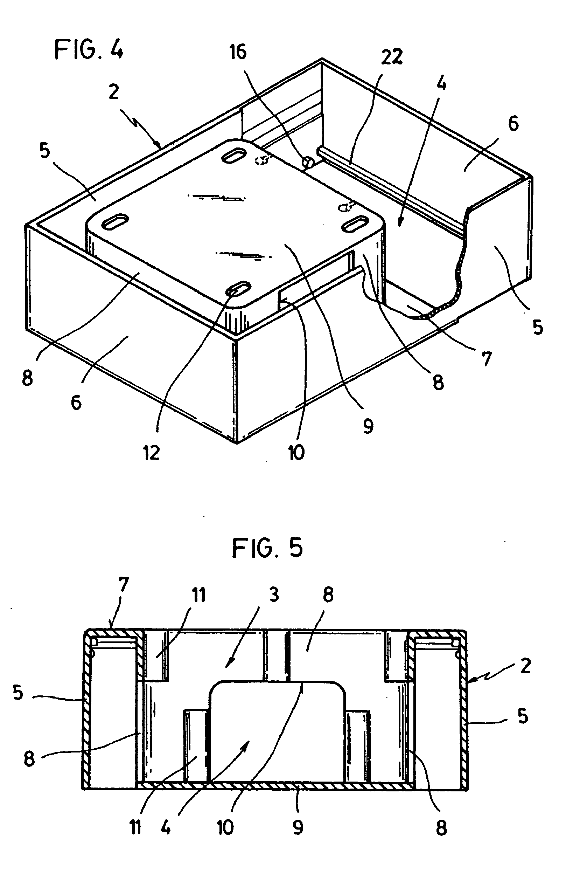

In this same Figure 1, aided by Figures 4 and 5, it is seen that hollow body 2 is orthohedric and has side walls 5 and end walls 6, all of which are outside walls without a link to a bottom wall, that a flat top frame 7 is linked to both of said side walls 5 and one of the adjacent end walls 6, and only covers first cavity 3, leaving second cavity 4 open, and that inner walls 8 extend towards a common bottom wall 9 from the inner edge of said flat top frame 7 to form first cavity 3, said inner walls 8 being provided with passages 10 for communicating with second cavity 4, with means 11 for fixing the electrical mechanism into the box and means 12 for fixing said box to a wall surface.

Also the same Figure 1 illustrates that the opening in box 1 that corresponds to second cavity 4 is intended to be closed by a rectangular practicable cover 13, not yet assembled on to box 1, which in its closed position is coplanar with flat top frame 7 of first cavity 3, as shown in Figure 3.

Analogously, in the same Figure 1, complemented by Figures 2 and 3, it is seen that practicable cover 13 includes a hinge joint made up of respective arched brackets 14 that are projected in an orthogonal and mirror symmetrical manner from the ends of the inner face of the cover, each of which has an equally arched slit 15 that runs along a fixed guide pin 16 arranged on the inner face of side walls 5 of box 1, which are adjacent to the ends of practicable cover 13.

Figures 2 and 3 show the detail wherein arched slits 15 of arched brackets 14 have the same transversal dimension along their whole extension, which is equal to the diameter of fixed guide pins 16, although said dimension is locally reduced near the ends of said slits by means of opposing projections 17, to form an end housing 18 that has the same diameter as fixed guide pins 16 to configure the secure position of end of stroke for said pins in the cover's open and closed positions.

Also, as shown in said Figures 1, 2 and 3, practicable cover 13 has on its end edges an arcuated retention tab 19 that fits into a corresponding closing arrangement on side walls 5 of body 2 of box 1 that is adjacent to the ends of practicable cover 13, said tab being formed by an inclined entry plane 20, shaped on the upper edge of the actual side wall 5, and a retainer projection 21 located below said inclined plane 20.

On the other hand, the same Figures 2 and 3 illustrate that end wall 6 of hollow body 2 of box 1 that is included in the opening in second cavity 4 has a longitudinal rib 22 near its top edge on which it sits, in the closed position of practicable cover 13, and a similar longitudinal rib 23 provided near the rear edge of practicable cover 13.

The invention contemplates that hollow body 2 can have two or more first cavities 3 accompanied by second cavities 4 of the group comprising one cavity that covers the two or more first cavities 3 or one cavity for each of the first cavities 3. Analogously, it has also been foreseen that the two or more second cavities 4 are closed in a practicable manner by one single practicable common cover, or that the two or more second cavities 4 are closed in a practicable manner by individual practicable covers.

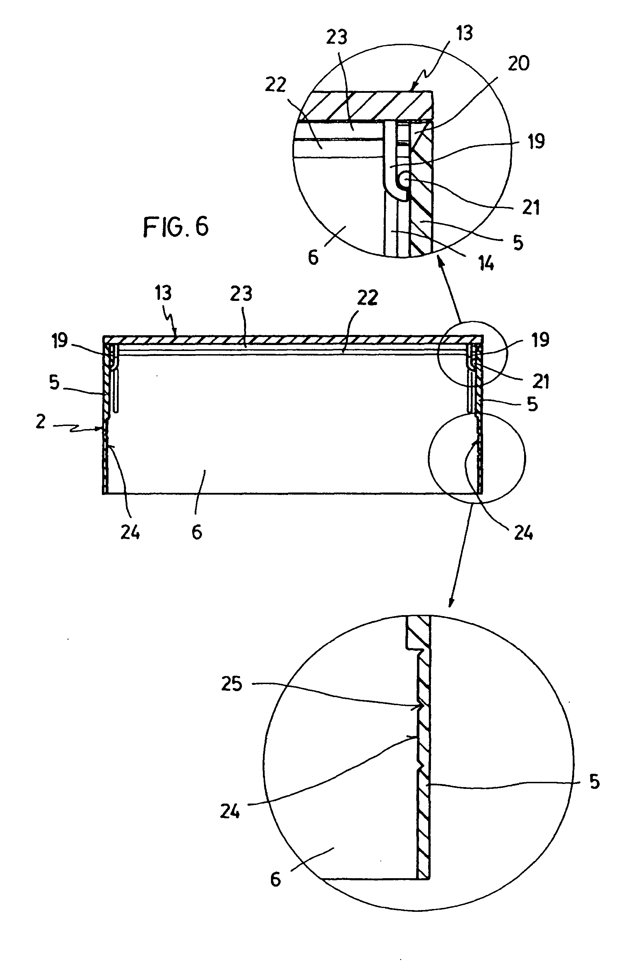

Moreover, as shown in the top detail in Figure 6, arcuated tab 19 fits into retainer projection 21, and as shown in the bottom detail in the same Figure 6, the area with the smallest thickness 24 of the ends of side walls 5 that are located in second cavity 4 comprise weakening lines 25 that allow parts of it to be broken in order to provide suitable openings so that moulding raceways can pass through in a fitted manner.

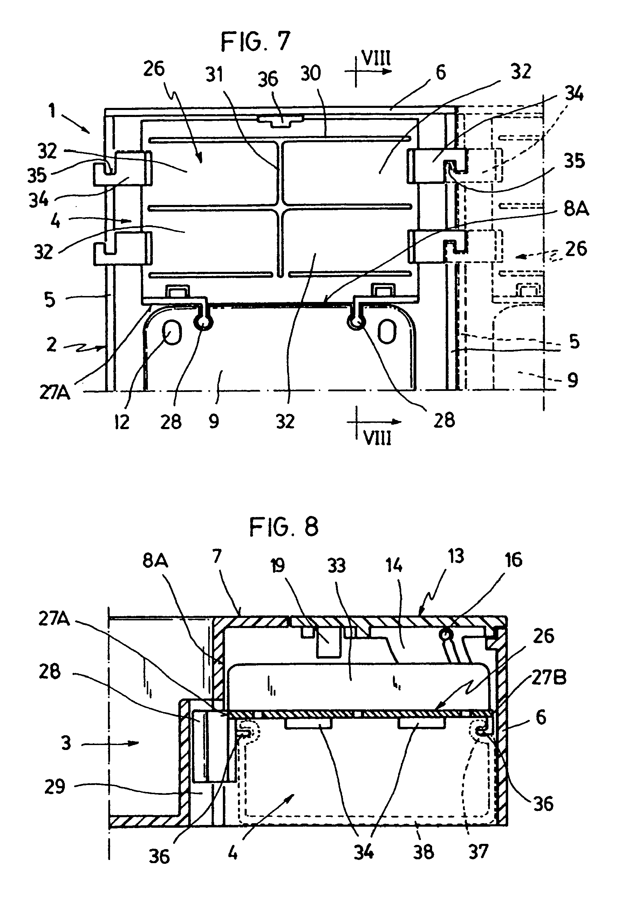

In a complementary manner, as shown in Figures 7 and 8, the space defined by second cavity 4 can be compartmented in the horizontal direction into two subspaces parallel to the seating plane of hollow body 2 of box 1 by means of a rectangular separator plate 26 that has, on one of its longitudinal edges 27A, appendices 28 which are attachable to retention means 29 provided on the central inner wall 8A.

Said rectangular plate 26 has: longitudinal 30 and transversal 31 grooves, which define a plurality of portions 32 of said plate that can be separated to create passage windows for the electrical conductors that have to be connected to the electrical mechanism located in first cavity 3; two end walls 33 of reduced height and with a width that is the same as the width of rectangular plate 26; a pair of cantilever fingers 34 projecting from each end of said rectangular separator plate 26 that have rectangular notches 35 at the ends thereof that are orientated so that the ones at one end can fit into the ones at an opposite end of another juxtaposed rectangular separator plate 26; and respective fitting teeth 36, one being arranged opposite to positioning appendices 28 of the rectangular separator plate 26 on the bottom face of longitudinal edge 27A, and the other one being arranged on the bottom face of longitudinal edge 27B of said rectangular separator plate 26, which allow a moulding conduit 38 for laying down the electrical conductors to fit into the cover's attachment groove 37.

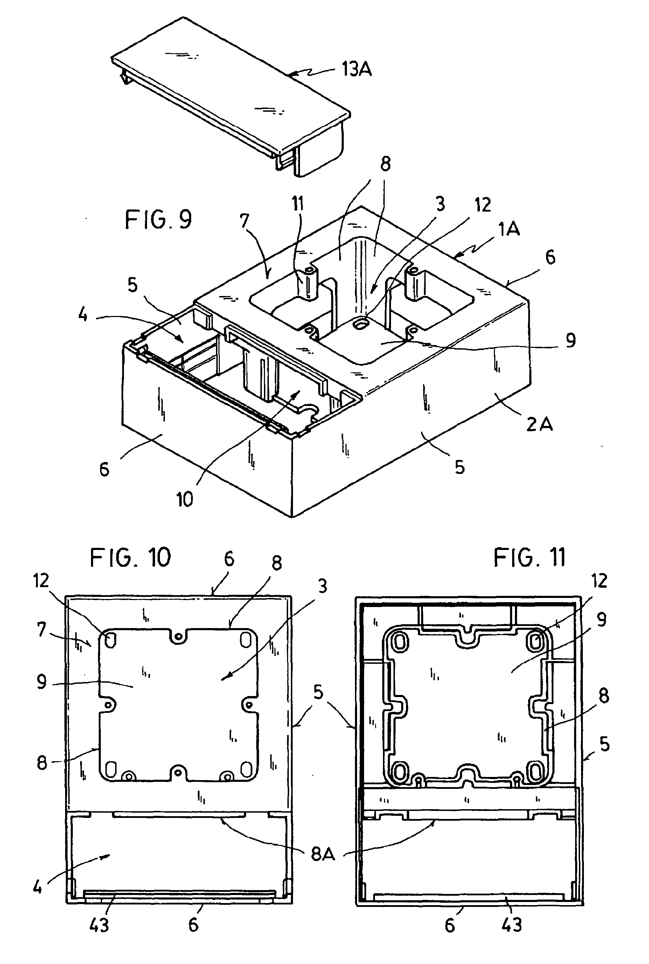

Figures 9 to 12 illustrate the case wherein box 1A for an electrical mechanism is made up of a hollow body 2A divided, similar to the case of hollow body 2, into a first cavity 3 intended to be closed when it houses an electrical mechanism is a firm and electrically insulated manner, and a second cavity 4 provided with practicable closing means, which is intended to house the branches of the electrical conductors so that they can connect to the electrical mechanism and, where appropriate, to pass the electrical conductors that are not intended to be connected to the electrical mechanism in said first cavity.

Said Figures 9 to 13 show that hollow body 2A, analogously to hollow body 2, is orthohedric and has side walls 5 and end walls 6, all of which are outside walls without a link to a bottom wall, that a flat top frame 7 is linked to both of said side walls 5 and one of the adjacent end walls 6 and only covers first cavity 3 leaving second cavity 4 open, that inner walls 8 extend towards a common bottom wall 9 from the bottom edge of said flat top frame 7 to form first cavity 3, said inner walls 8 being provided with passages 10 for communicating with second cavity 4, with means 11 for fixing the electrical mechanism into box 1A and means 12 for fixing said box to a wall surface.

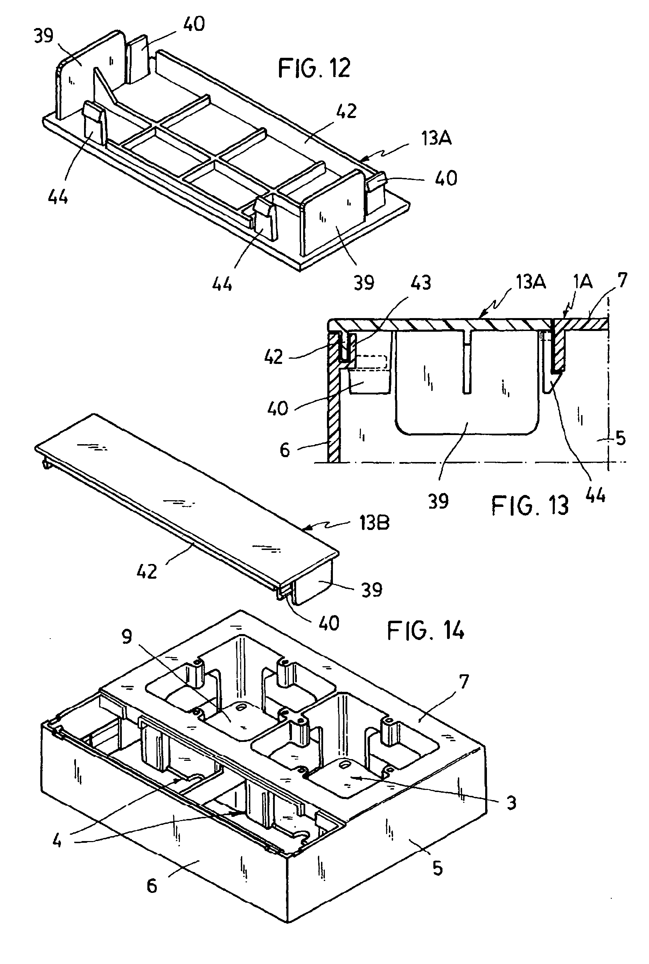

Also in Figure 9 it can be seen that the opening in box 1A that corresponds to second cavity 4 is intended to be closed by a rectangular practicable cover 13A, not yet assembled on box 1A, which in its closed position is coplanar to flat top frame 7 of first cavity 3, as it can be seen in Figure 13.

Figure 12 illustrates practicable cover 13A provided at each end with tabs 39 for fitting into the corresponding inner side wall 5 and a harpooned tooth 40 for fitting into a groove 41 provided on each of said side walls 5, while on its longitudinal edges, on the edge near the outside of the box, it is provided with an edge 42 that fits into groove 43 of an end wall 6 of said box 1A and, on the longitudinal edge towards the inside of box 1A, it has harpooned teeth 44 for fitting into housings 45 provided on a face 8A of inner wall 8 of box 1A that corresponds to second cavity 4.

Figure 13 shows a detail of practicable cover 13A in body 2A of box 1A when said cover is in the stable closed position.

Figure 14 illustrates the case wherein box 1 B has two first cavities 3 and two second cavities 4, and also a practicable cover 13B that is common cover for simultaneously closing the two second cavities 4, however, it is envisaged that each of these second cavities 4 has an independent practicable cover. This embodiment and others with a larger number of cavities is also applicable to the case of box 1 with a hinged cover.

## Claims

1. Box for electrical mechanisms, in particular a box which, while housing electrical control mechanisms inside it, also allows for the connections of said mechanisms to be controlled, the unit being intended particularly to be installed on the wall surface, in cooperation with raceways of the so-called moulding type for laying down electrical conductors, **characterized in that** it is made up of a hollow body divided into a first cavity intended to house an electrical mechanism in a firm and electrically insulated manner and a second cavity which is provided with practicable closing means and is intended to house the branches of the electrical conductors provided for their connection to the electrical mechanism and, where appropriate, to pass the electrical conductors which are not intended to be connected to the electrical mechanism in said first cavity, the hollow body adopting an orthohedric shape having: side walls and end walls, all of which are outside walls without a link to a bottom wall, a flat top frame that is linked to three adjacent side and end walls, and only covers the first cavity leaving the second cavity open; and inner walls that extend towards a common bottom wall from the inner edge of said flat top frame to form the first cavity, said inner walls being provided with passages for communicating with the second cavity, with seating and fixing means for the electrical mechanism in the box and fixing means of said box to a wall surface.

2. Box for electrical mechanisms, according to the preceding claim, **characterized in that** the opening of the hollow body of the box that corresponds to second cavity of the box is closed by means of a practicable cover that has a tab at each end for fitting into the corresponding inner side wall and a harpooned tooth for fitting into a groove provided on each of said side walls, while on its longitudinal edges, on the edge towards the outside of the box, it is provided with an edge that fits into a groove of an end wall of said box, and, on the longitudinal edge towards the inside of the box, it has harpooned teeth for fitting into housings provided on a face of the inner wall of the box that corresponds to the second cavity.

3. Box for electrical mechanisms, according to claim 1, **characterized in that** the opening in the hollow body of the box that corresponds to the second cavity of the box is closed by a practicable cover which is attached to said cavity in a hinged manner and in its closed position is coplanar with the flat top frame of the first cavity.

4. Box for electrical mechanisms, according to claim 3, **characterized in that** the practicable cover includes a hinge joint that attaches to the box and is made up of respective arched brackets that are projected in an orthogonal and mirror symmetrical manner from the ends of the inner face of the cover and each of which having an equally arched slit that runs along a fixed guide pin arranged on the inner face of the box walls which are adjacent to the cover ends.

5. Box for electrical mechanisms, according to claim 3, **characterized in that** the arched slits of the arched brackets have the same transversal dimension along their whole extension, which is equivalent to the diameter of the fixed guide pins, although it is locally reduced near the ends of said slits by means of two opposing projections, to form an end housing that has the same diameter as the fixed guide pins to configure the secure position of end of stroke for said pins in the cover's open and closed position.

6. Box for electrical mechanisms, according to claim 3, **characterized in that** the practicable cover has a retention tab on its end edges that fits into a corresponding closing arrangement on side walls of the hollow body of the box that are adjacent to the ends of the practicable cover, said tab being formed by an inclined entry plane and a retainer projection.

7. Box for electrical mechanisms, according to claim 3, **characterized in that** the wall of the hollow body of the box that is included in the opening in the second cavity has a longitudinal rib near its top edge on which it sits, in the closed position of the practicable cover, a similar rib provided near the rear edge of said practicable cover.

8. Box for electrical mechanisms, according to claim 1, **characterized in that** the hollow body of the box can have two or more first cavities accompanied by second cavities of the group comprising one cavity that covers the two or more first cavities or one cavity for each of the first cavities.

9. Box for electrical mechanisms, according to claim 8, **characterized in that** the second cavities of the hollow body of the box, when there are two or more of them, are closed in a practicable manner by one single common cover.

10. Box for electrical mechanisms, according to claim 8, **characterized in that** the second cavities of the hollow body of the box, when there are two or more of them, are closed in a practicable manner by individual covers.

11. Box for electrical mechanisms, according to claim 1, **characterized in that** the space defined by the second cavity can be compartmented in the horizontal direction into two subspaces parallel to the seating plane of the hollow body of the box by means of a rectangular separator plate that, on one of its longitudinal edges, has appendices which are attachable to positioning means arranged on the central inner wall of the walls defining the second cavity.

12. Box for electrical mechanisms, according to claim 11, **characterized in that** the rectangular separator plate has longitudinal and transversal grooves that define a plurality of portions of said plate that can be separated.

13. Box for electrical mechanisms, according to claim 11, **characterized in that** the rectangular separator plate has respective fitting teeth, one being arranged opposite to the appendices of the rectangular separator plate on the bottom face of the longitudinal edge and the other one being arranged on the bottom face of the longitudinal edge of said rectangular separator plate, which allow a moulding conduit for laying down electrical conductors to fit into the cover's attachment groove.

14. Box for electrical mechanisms, according to claim 11, **characterized in that** the rectangular separator plate has a pair of cantilever fingers projecting from each end of said rectangular separator plate, which have rectangular notches at their ends that are orientated so that the ones at one end can fit into the ones at the other opposite end of another rectangular separator plate installed in a juxtaposed box.
